(19) Europäisches Patentamt
European Patent Office
Office européen des brevets

(11) Veröffentlichungsnummer: **0 074 010**
**B1**

# (12) EUROPÄISCHE PATENTSCHRIFT

(45) Veröffentlichungstag der Patentschrift: **09.04.86**

(51) Int. Cl.⁴: **C 08 J 7/04**, C 09 D 3/82

(21) Anmeldenummer: **82107727.8**

(22) Anmeldetag: **24.08.82**

## (54) Beschichtungen für Thermoplaste.

(30) Priorität: **05.09.81 DE 3135184**

(43) Veröffentlichungstag der Anmeldung: **16.03.83 Patentblatt 83/11**

(45) Bekanntmachung des Hinweises auf die Patenterteilung: **09.04.86 Patentblatt 86/15**

(84) Benannte Vertragsstaaten: **BE DE FR GB IT**

(56) Entgegenhaltungen:
**EP-A-0 017 187**
**GB-A-2 067 582**

(73) Patentinhaber: **BAYER AG, Konzernverwaltung RP Patentabteilung, D-5090 Leverkusen 1 Bayerwerk (DE)**

(72) Erfinder: **Schönfelder, Manfred, Dr., Hoehenstrasse 126, D-5090 Leverkusen 3 (DE)**
Erfinder: **Steinberger, Helmut, Dr., Winand-Rossi-Strasse 36, D-5090 Leverkusen 1 (DE)**

EP 0 074 010 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft Schutzüberzugszubereitungen, insbesondere transparente abrieb- und kratzfeste Überzüge auf transparenten thermoplastischen Polymeren, vornehmlich auf Polycarbonat.

Es besteht ein erheblicher Bedarf an sogenannt unzerbrechlichen, leichten, transparenten Materialien, die im Gegensatz zu Glas eine geringere Zerbrechlichkeit und niedrigeres spezifisches Gewicht aufweisen. Solche transparenten Materialien und Formteile lassen sich aus Polycarbonaten, Polymethylmethacrylaten, Celluloseester, Polystyrol oder Polyvinylchlorid herstellen. Diese Stoffe haben jedoch den Nachteil, daß sie eine leicht zu beschädigende Oberfläche aufweisen und daß sie bei Berührung mit organischen Lösungsmitteln quellen oder angelöst werden.

Zur Vermeidung dieser nachteiligen Eigenschaften von Formteilen sind bereits verschiedene Verfahren entwikkelt worden, beispielsweise Verfahren zum Beschichten mit einer Beschichtungsmasse, die als Hauptbestandteile ein Hydrolyseprodukt von Tetraalkoxysilan und ein Copolymerisat eines Fluorolefins mit einem Omega-Hydroxyalkylvinylether enthält (US-PS 3 429 845). Nach einem anderen Verfahren werden Formteile mit einem Hydrolyseprodukt eines Alkyltrialkoxysilans beschichtet (US-PS 3 451 838). Ein weiteres Verfahren verwendet zur Beschichtung von Formteilen partielle Hydrolysate von Tetraalkoxysilan und Alkyltrialkoxysilanen (japanische Patentanmeldung 56 230/1973). Weitere Vorschläge zur Beschichtung gehen von der Anwendung von Polykieselsäuren unter Mitverwendung von Acrylcopolymerisaten und veretherten Methylolmelaminen aus, die den behandelten Oberflächen eine gute Abriebbeständigkeit und Wasserbeständigkeit verleihen sollen (japanische Patentanmeldung 34 214/1974). Anstelle von gelösten Polykieselsäuren lassen sich auch Dispersionen kolloidaler Kieselsäure zusammen mit Teilhydrolysaten von Alkyltrialkoxysilanen verwenden (DE-OS 2 506 202, DE-OS 2 446 279, DE-OS 2 947 823, DE-OS 2 947 879, DE-OS 3 014 581, DE-OS 3 014 772).

Materialien, die nach einem der vorher beschriebenen Verfahren hergestellt wurden, konnten bisher nur begrenzte wirtschaftliche Bedeutung erlangen, da sie schwierig anzuwenden sind, eine mäßige Feuchtigkeitsbeständigkeit haben oder zu aufwendig sind. Ferner ist die Elastizität und Haftung des ausgehärteten Überzugsfilmes für Anwendungszwecke, in denen die beschichteten Formkörper zeitweiligen Formveränderungen ausgesetzt sind, nicht ausreichend.

Es wurden auch Versuche unternommen, die Haftung und Filmelastizität mit Kombinationen von Aminoalkylalkoxysilanen mit Acryloxyalkylalkoxysilanen oder Vinylalkoxysilanen sowie Kombinationen von Epoxyalkylalkoxysilanen mit Acryloxyalkylalkoxysilanen oder Vinylalkoxysilanen zu verbessern. Es zeigte sich jedoch, daß aus diesen Stoffen hergestellte Überzüge eine schlechte Kratzfestigkeit besitzen.

Ein Überzug, der durch Vernetzen des Organopolysiloxans im höherem Grad durch Verwendung eines Härtungskatalysators erzeugt wird, besitzt jedoch bekanntlich schlechte Gleiteigenschaften, bedingt durch seinen hohen Reibungskoeffizienten. Es ist daher wichtig, die Gleiteigenschaften zu verbessern, indem man eine glattere Überzugsfläche schafft, so daß man auch eine verbesserte Abriebsbeständigkeit erhält.

Auf Gebieten, die im Zusammenhang mit der Überzugstechnologie stehen, ist bekannt, oberflächenaktive Mittel als Egalisiermittel zu verwenden, um glatte beschichtete Oberflächen zu erhalten. Die bekannten oberflächenaktiven Mittel ergeben jedoch keine zufriedenstellende Egalisierungswirkung in einer Überzugslösung, die ein Organopolysiloxan enthält. Wird eine größere Menge an oberflächenaktivem Mittel zur Verbesserung der Oberflächenglätte zugegeben, so verschlechtert sich die Adhäsionseigenschaft der Überzugsmasse gegenüber dem Grundmaterial.

Die EP-A-0 017 187 schließlich beschreibt eine Beschichtungsmasse, im wesentlichen wie im ersten Teil des Anspruchs 1 angegeben ist.

Es wurde nun gefunden, daß durch Zusätze bestimmter Organooligosiloxane der Formel:

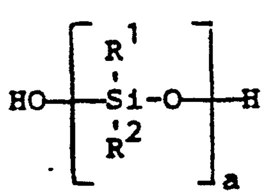

worin $R^1$ und $R^2$ niedere Alkylgruppen, Alkenylgruppen oder Phenyl bedeuten und a eine mittleren Wert zwischen 1 und 25 bedeutet, einer Überzugsmasse gemäß der EP-A-0 017 187 zusätzliche Härte und gute Gleiteigenschaften des Filmes verliehen werden, ohne andere Eigenschaften des gehärteten Filmes nachtsilig zu beeinflussen.

Dieser Befund ist insofern überraschend, da bekannt ist, daß Zusätze von solchen Alkoxysilanen, welche sich zu linearen Molekülketten aufbauen können, zu einer Verminderung der Kratzfestigkeit von

Überzugszubereitungen führen.

Die erfindungsgemäßen Zusatzmittel führen jedoch nicht zu einer Verminderung, sondern zu einer Erhöhung der Kratzbeständigkeit und zu einer verbesserten Oberflächenglätte.

Der vorliegenden Erfindung lag die Aufgabe zugrunde eine Überzugsmasse zu schaffen, die auf der Oberfläche von Formkörpern aus organischen Thermoplasten wie zum Beispiel Polycarbonat oder Polymethylmethacrylat eine Schutzschicht mit hoher Oberflächenhärte, Kratzfestigkeit, Lösungsmittelbeständigkeit und großer Oberflächenglätte bildet.

Die Lösung der Aufgabe besteht darin, daß durch Zusatz von Organopolysiloxanen der Formel:

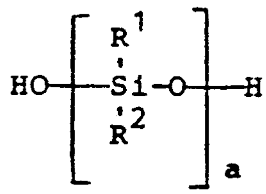

worin $R^1$ und $R^2$ unabhängig voneinander für Methyl, Ethyl, Propyl, Phenyl oder Vinyl steht und a eine ganze Zahl zwischen 1 und 25 bedeutet, zur Polykieselsäurekomponente die Oberflächenglätte und die Kratzfestigkeit des Beschichtungsmittels auf dem Trägermaterial verbessert wird, wobei die übrigen Eigenschaften der Beschichtung in vollem Umfang erhalten bleiben.

Gegenstand der Erfindung ist eine Beschichtungsmasse, die im wesentlichen besteht aus:

(A) 10 bis 40 Gew.-% bezogen auf das Gesamtgewicht des Überzugsmittels, einer teilweise hydrolysierten Siloxanverbindung, die durch Hydrolyse mindestens einer der folgenden Verbindungen in Wasser bei 50 bis 80°C während einer Reaktionsdauer von etwa 1 bis 12 Stunden erhalten wird:

(a) eines Kohlenwasserstoff-trialkoxysilans der Formel $R'Si(OR'')_3$, worin R' eine Alkylgruppe mit 1 bis 4 Kohlenstoffatomen, eine Phenyloder Vinylgruppe und R'' eine Alkylgruppe mit 1 bis 4 Kohlenstoffatomen bedeuten,

und/oder

(b) Co-Kondensationsprodukten von (a) und 1 bis 40 Gew.-% eines Phenyl- oder Vinyltrialkoxysilans, worin die Alkoxygruppe 1 bis 4 Kohlenstoffatome enthält,

und/oder

(c) Co-Kondensationsprodukten von 1 Mol von (a) und 0,01 bis 1 Mol Tetraalkoxysilan, worin die Alkoxygruppe 1 bis 4 Kohlenstoffatome enthält,

und/oder

(d) Co-Kondensationsprodukten von 1 Mol von (a) und 0,05 bis 1 Mol Dialkyldialkoxysilan, worin die Alkyl- und Alkoxygruppen 1 bis 4 Kohlenstoffatome enthalten,

(B) 0 bis 40 Gew.-%, bezogen auf das Gesamtgewicht der Beschichtungsmasse, einer wäßrigen Dispersion von kolloidalem Siliziumdioxid,

(C) 0 bis 5 Gew.-%, bezogen auf das Gesamtgewicht des Überzugsmittels, eines veretherten Methylolmelamins,

(D) 0,05 bis 15 Gew.-%, bezogen auf das Gesamtgewicht der Beschichtungsmasse, eines blockierten Polyisocyanates,

(E) 0,5 bis 30 Gew.-%, bezogen auf das Gesamtgewicht der Beschichtungsmasse Essigsäure sowie als Rest ein inertes organisches Lösungsmittel, dadurch gekennzeichnet, daß es weiterhin,

(F) 0,05 bis 4 Gew.-%, bezogen auf das Gesamtgewicht der Beschichtungsmasse, eines durch Hydroxylgruppen terminierten Polysiloxans mit einer mittleren Kettenlänge zwischen 1 und 25 enthält.

Das Mittel wird auf die Oberfläche von z.B. Polycarbonatgegenständen aufgebracht und gehärtet. Die beschichteten Polycarbonatgegenstände besitzen ausgezeichnete Eigenschaften wie Oberflächenhärte, Kratzbeständigkeit, Lösungsmittelbeständigkeit und Beständigkeit gegen Haarrißbildung bei Beanspruchung.

Die neuen erfindungsgemäßen Überzugsmittel besitzen eine lange Topfzeit. Sie können auf die Oberfläche von Polycarbonatformgegenständen aufgebracht und bei einer Temperatur von ungefähr 80°C bis ungefähr 130°C gehärtet werden, um die Lösungsmittel, die darin enthalten sind, zu verdampfen und um eine Kondensationsreaktion zu erreichen.

Die Kohlenwasserstoff-trialkoxysilane (1) sind multifunktionelle Siloxanverbindungen der Formel $R'Si(OR'')_3$, worin R' eine Alkylgruppe mit 1 bis 4 Kohlenstoffatomen, eine Phenyl-, oder eine Vinylgruppe bedeutet und R'' eine Alkylgruppe mit 1 bis 4 Kohlenstoffatomen bedeutet. Methyltriethoxysilan ist bevorzugt. Ein Teilhydrolysat von Kohlenwasserstofftrialkoxysilanen wird erhalten, indem man Wasser zu Kohlenwasserstofftrialkoxysilanen bringt und das entstehende Material bei einer Temperatur von 50° bis 80°C während 1 bis 12 Stunden erwärmt. Die Herstellung solcher Teilhydrolysate ist an sich bekannt und beispielsweise in der US-Patentschrift 3 451 838, DE-OS 1 923 290 und in der US-PS 4 006 271 beschrieben.

Ein teilweise hydrolysiertes Co-Kondensationsprodukt, das im wesentlichen 1 Mol des Kohlenwasserstofftrialkoxysilans als Hauptkomponente und 0,05 bis 1 Mol Tetraalkoxy (C 1 bis C 4)-Silan als zusätzliche Komponente enthält, bildet einen Überzug mit verbesserter Härte.

Ein teilweise hydrolysiertes Co-Kondensationsprodukt aus 1 Mol Kohlenwasserstofftrialkoxysilan und 0,05 Mol bis 1 Mol Dialkyl-(C 1 bis C 4)-dialkoxy-(C 1 bis C 4)-silan bildet den weichen Überzug.

Zusätze von wäßrigen Dispersionen von kolloidalem Siliziumdioxid zum teilweise hydrolysierten (Co)-Kondensationsprodukt aus Alkyltrialkoxysilan und gegebenenfalls Tetraalkoxysilan bilden Überzüge mit verbesserter Härte.

Die gegebenenfalls mitverwendeten veretherten Methylolmelamine sind technische Produkte, die in an sich bekamnter Weise hergestellt werden. Spezielle Beispiele für diese Verbindungen sind Hexaalkoxymethylmelamine wie Hexamethoxymethylmelamin, Hexaethoxymethylmelamin, Hexapropoxymethylmelamin, Hexaisopropoxymethylmelamin, Hexabutoxymethylmelamin und Hexacyclohexyloxymethylmelamin.

Das veretherte Methylolmelamin wird vorzugsweise in einer Menge von 0 bis 150 Gewichtsteilen auf 100 Gewichtsteile (berechnet als $SiO_2$) des partiellen Hydrolyseprodukts der Tetraalkoxysilanverbindung bzw. der kolloidalen Kieselsäure verwendet. Bei Zusatz von mehr als 150 Gewichtsteilen verethertem Methylolmelamin nimmt die Haftfestigkeit und die Härte der Beschichtung ab. Der Zusatz des veretherten Methylolmelamins verleiht der Beschichtung sowohl Härte als auch Biegsamkeit.

Die zugesetzten verkappten Polyisocyanate sind lösungsmittelfreie, gegebenenfalls 2 - 4 Gew.-% Polyether enthaltende, stabile wäßrige Emulsionen blockierter Isocyanate, bei denen als emulgierende Komponente Salze von Diaminosulfonsäuren verwendet werden. Sie werden hergestellt durch Umsetzung beliebiger, vorzugsweise di- bis tetrafunktioneller, Polyisocyanate mit Verbindungen, die gegenüber Isocyanatgruppen reaktionsfähige Molekülgruppierungen aufweisen. Hierfür kommen unter anderem sekundäre oder tertiäre Alkohole, C-H-acide Verbindungen, Oxime, Lactame, Phenole, N-Alkylamide, Imide, Imidazole, Triazole oder Alkalibisulfite in Frage. Vorzugsweise werden C-H-acide Verbindungen, insbesondere aktivierte Methylengruppen enthaltende Verbindungen, wie z.B. Malonsäuredialkylester, Acetessigsäurealkylester oder Acetylaceton eingesetzt.

Die Umsetzung der Polyisocyanatfunktion mit der gegenüber Isocyanatgruppen reaktionsfähigen Molekulargruppierung erfolgt in Gegenwart bestimmter Mengenanteile von aromatischen, aliphatischen oder araliphatischen Diaminosulfonsäuren bzw. derer Alkali- oder Ammoniumsalze.

Die verwendeten blockierten Polyisocyanate sind durch Umsetzung von Polyisocyanaten mit Blockierungsmitteln wie z.B. Malonsäurediethylester oder Acetessigsäureethylester in an sich bekannter Reaktion erhältlich. Die Löslichkeit bzw. Dispergierbarkeit des blockierten Polyisocyanats beruht in der Einbeziehung von hydrophilen Komponenten in die Additionsreaktion, deren ionische oder nichtionische wasserdispergierend wirkende Polyethylenoxid-Segmente beim Aufbau des Polymeren mit eingebaut werden.

Durch den Einbau der ionischen oder nichtionischen hydrophilen Gruppen werden die betreffenden blockierten Polyisocyanate ihrerseits so weit hydrophil, daß sie in Wasser oder in wäßrig-alkoholischen Lösungen oder Zubereitungen löslich oder stabil dispergierbar und verträglich mit den für die Thermoplastbeschichtung geeigneten Zubereitungen sind.

Die erfindungsgemäß zugesetzten kurzkettigen, durch Hydroxylgruppen terminierten Polysiloxane sind an sich bekannte, niedrigviskose und wasserklare Flüssigkeiten, die in den betreffenden wäßrig-alkoholischen Lösungen oder Zubereitungen löslich sind. Die Kettenlänge der Siloxankette soll etwa 1 bis 25, bevorzugt 2 - 20, besonders bevorzugt 4 - 15 betragen; Materialien dieser Art weisen bevorzugt ein mittleres Molgewichtvon etwa 150 bis 1800 auf. Als Substituenten am Si-Atom kommt bevorzugt Methyl infrage. Es ist jedoch auch möglich, solche Siloxane die z.B. Vinyl-, Phenyl-, Ethyl-, Propylreste tragen, einzusetzen.

Die organischen Lösungsmittel, die zusätzlich zur Essigsäure verwendet werden, sind nicht kritisch. Es kommen hierfür Alkohole, Ketone, Ether und/oder aromatische Kohlenwasserstoffe in Betracht. Zur Herstellung des Überzugsmittels sind von diesen Lösungsmitteln Ethanol und Isopropanol besonders bevorzugt. Die Menge an organischen Lösungsmitteln muß ausreichen, um die teilweise hydrolysierte Verbindung zusammen mit der Essigsäure und den übrigen erwähnten Zusatzmitteln vollständig zu lösen und um die Konzentration an der teilweise hydrolysierten Verbindung auf 5 bis 15 Gew.-%, berechnet als Feststoffe und bezogen auf das Gesamtgewicht des Überzugsmittels, einzustellen.

Um erfindungsgemäß Thermoplaste mit dem Überzugsmittel zu beschichten, kann man irgendwelche Verfahren wie Eintauch-, Sprüh- und Gießverfahren verwenden. Die so beschichteten Thermoplastkörper werden dann erwärmt, um das Überzugsmittel zu härten. Die Härtungstemperatur kann üblicherweise im Bereich von 60 bis 140°C liegen.

Da die notwendige Härtungstemperatur umso höher ist, je kürzer die Härtungszeit ist, ist es bevorzugt, die aufgetragene Schicht bei einer Temperatur zu härten, die so hoch wie möglich ist, aber niedriger als die Wärmeverformungstemperatur des Thermoplasten. Im allgemeinen ist es bevorzugt, bei 80 bis 120°C während 0,5 bis 10 Stunden zu härten.

Im folgenden wird die Erfindung noch näher erläutert:

**Beispiel**

**Herstellung der Grundkomponenten:**

a) Zu 300 g kolloidaler Kieselsäure mit 30 Gew.-% $SiO_2$-Gehalt werden 19,8 g Eisessig, 210 g destilliertes Wasser und 227 g Isopropanol gegeben. Nach gründlicher Durchmischung wird eine Mischung aus 900 g Methyltriethoxysilan und 1,5 g des erfin-dungsgemäßen hydroxylgruppenterminierten Polydimethylsiloxans mit einer durchschnittlichen Kettenlänge von 5,5 zugesetzt und die Gesamtmischung unter Rühren auf 60°C erwärmt. Man beläßt während 4 Stunden bei dieser Temperatur und fügt anschließend weitere 1200 g Isopropanol zur Mischung hinzu. Nach Abkühlen des Produktes auf Raumtemperatur wird die schwach opake Lösung filtriert.

b) In einem mit Rührer und Rückflußkühler versehenen Gefäß werden 340 g Isopropanol, 190 g Tetraethoxysilan und 360 g Methyltriethoxysilan vorgelegt. Dieses Gemisch wird mit 180 g 0,05 n Salzsäure versetzt und zur Durchführung der Cohydrolyse fünf Stunden unter Rückfluß erwärmt. Nach der Umsetzung wird das Gemisch auf Raumtemperatur abgekühlt. Man erhält eine Lösung, die ein Teilhydrolysat von Tetraethoxysilan (5,1 Prozent, berechnet als $SiO_2$) und Teilhydrolysat von Methyltriethoxysilan (12,6 Prozent, berechnet als $CH_3SiO_{1,5}$) enthält.

c1) 335 g Tetraethoxysilan und 167 g Methyltriethoxysilan werden in 350 g Isopropanol gelöst und mit 150 g einer 0,05 n Salzsäure versetzt und bei Raumtemperatur gerührt. Nach beendeter Umsetzung wird das Gemisch nach 24 Stunden bei Raumtemperatur stehengelassen. Die erhaltene Lösung enthält ein partielles Hydrolyseprodukt von Tetraethoxysilan (9,6 % berechnet als $SiO_2$) und ein partielles Hydrolyseprodukt von Methyltriethoxysilan (6,3 %, berechnet als $CH_3SiO_{1,5}$).

c2) 415 g Tetraethoxysilan und 85 g Dimethyldiethoxysilan werden in 350 g Isopropanol gelöst, mit 150 g einer 0,05 n Salzsäure versetzt und bei Raumtemperatur gerührt. Nach beendeter Umsetzung wird das Gemisch nach 24 Stunden stehengelassen. Die erhaltene Lösung enthält ein partielles Hydrolyseprodukt von Tetraethoxysilan (12 %, berechnet als $SiO_2$) und ein partielles Hydrolyseprodukt von Dimethyldiethoxysilan (4,2 %, berechnet als $(CH_3)_2SiO$).

Vor Verwendung als Beschichtungsmittel werden die beiden Komponenten gemäß c) im Verhältnis 1:1 miteinander vermischt und in einer Mischung aus 60 Gewichtsteilen n-Butanol, 40 Gew.-Teilen Essigsäure und 20 Gew.-Teilen Toluol gelöst.

Der Zusatz von blockiertem Polyisocyanat erfolgt durch einfaches Vermischen mit der fertiggestellten Grundkomponente.

**Herstellung eines blockierten Isocyanats (1)**

370 g Malonsäurediethylester werden bei Raumtemperatur mit 2,7 g Natriumphenolat 15 Minuten verrührt. Man setzt 500 g eines biuretisierten Hexamethylendiisocyanats (23,8 % NCO-Gruppen) zu und rührt nach Abklingen der exothermen Reaktion 3 Stunden bei 90°C nach. Sodann werden 40 g eines auf n-Butanol gestarteten Ethylenoxid-Polyethers (MG = 2000) und 1 ml Zinn-(II)-octoat zugegeben und weitere 3 Stunden bei 90°C gerührt. Unter Erhöhung der Rührerumdrehungszahl setzt man nun eine Lösung von 46 g Natrium-2,4-diaminobenzolsulfonat in 150 ml Wasser und rührt 2 Stunden bei 60°C. Dann wird mit 800 ml Wasser verdünnt und bis zum Erhalt einer milchig-opaken Emulsion nachgerührt. Die Emulsion enthält ca. 50 Gew.-% Feststoff. Der Gehalt an blockierten NCO-Gruppen beträgt etwa 5 %.

**Herstellung eines blockierten Isocyanats (2)**

67,5 g Butandiol-1,3 werden bei 120°C zu 333 g Isophorondiisocyanat getropft. Man rührt 2 Stunden, kühlt auf 90°C ab und setzt 187 g Malonsäurediethylester zu, in dem zuvor 3 g Natriumphenolat gelöst wurden. Es wird 3 Stunden bei 90°C gerührt. Dann gibt man unter Kühlung auf 70°C eine Lösung von 42 g des Natriumsalzes der 2-(2-Aminoethylamino)ethansulfonsäure in 350 ml Isopropanol zu. Man rührt 2 Stunden und erhält eine wasserverdünnbare, gelblich-trübe Lösung eines blockierten Polyisocyanats.

Feststoffgehalt: 70 %
NCO-Gehalt (blockiert): 5,4 %

**Herstellung eines blockierten Isocyanats (3)**

Man verfährt ebenso wie in Beispiel (1) angegeben, und setzt nach beendeter Reaktionsfolge anstelle von 800 ml Wasser 200 ml Isopropanol zu. Man erhält eine klare, gelbe, mit Wasser verdünnte Flüssigkeit. Die Lösung enthält ca. 76 Gew.-% Feststoff. Der Gehalt an blockierten NCO-Gruppen beträgt 7,6 %.

Beschichten von Substraten und Prüfung der Eigenschaften der Beschichtungen:

3 mm dicke Platten aus handelsüblichem Polycarbonat (Makrolon(R)) oder Polymethylmethacrylat werden mit Wasser und Isopropanol gereinigt und sodann mit den Beschichtungsmassen beschichtet. Die beschichteten Platten werden zur Aushärtung der Beschichtungsmasse in einem Heißlufttrockner 2 Stunden auf 120° C.er-hitzt.

Die beschichteten Platten werden nach erfolgter Aushärtung 2 Tage bei Raumtemperatur gelagert und sodann folgenden Versuchen unterworfen:

**1. Haftfestigkeit auf dem Trägermaterial**

Die auf die Platte aufgebrachte ausgehärtete Schicht wird bis zum Substrat mit einer scharfen Klinge kreuzweise eingekerbt, daß 100 Quadrate mit einer Fläche von 1 $mm^2$ gebildet werden. Ein Cellophanklebeband wird dann fest auf die kreuzweise eingeschnittenen Linien aufgeklebt und mit einem 90°-Wimkel zur aufgetragenen Schicht abgezogen. Das Verfahren wird dreimal wiederholt. Die erhaltenen Haftungswerte werden in fünf Klassen eingeteilt von 1 (keine Entlaminierung) bis 5 (vollständige Entlaminierung), abhängig von der Zahl der zurückbleibenden Zellen..

**2. Kratzbeständigkeit (Stahlwolle-Abriebversuch)**

Die beschichtete Oberfläche der Platten wird mit einer Stahlwollprobe der Feinheit 0000 gerieben. Die Ergebnisse werden entsprechend den folgenden Kategorien bewertet, abhängig von dem Ausmaß, in dem die Oberfläche verkratzt war.

A = Keine Kratzer, selbst bei starkem Reiben der Oberfläche mit Stahlwolle
B = Etwas angekratzt, wenn die Oberfläche mit Stahlwolle gerieben wurde
C = Leicht angekratzt, wenn die Oberfläche mäßig mit der Stahlwolle gerieben wurde.

**3. Hub-Schubmethode**

Die Abriebfestigkeit der mit der Beschichtungsmasse der Erfindung erhaltenen Beschichtung wird durch einen oszillierenden Abrieb-Test nachgewiesen. Dieser Test wird in einer besonderen Vorrichtung durchgeführt, die im wesentlichen aus einer Schüttelplatte in einem Gehäuse besteht, die durch einen Motor hin- und herschwingend mit einer Frequenz von 150 min 1 und einem Hub von 10 cm betrieben wird. Am dieser Schüttelplatte wird das zu untersuchende beschichtete Substrat befestigt. Mit Hilfe eines Schleifmittel, das sich im Druckkontakt mit der beschichteten Oberfläche befimdet, wird bei konstanter Auflagekraft des Schleifmittels die jeweilige Eintrübung der Oberfläche nach unterschiedlichen Hubzahlen ermittelt.

Die Trübung, verursacht durch den Abrieb, wird in einer Photometerkugel nach ASTM 1003 gemessen. Die Trübung wird an zwei Proben im Anlieferungszustand und nach 5, 20 und 50 Umdrehungen gemessen. Die Trübungszunahme (Differenz zwischen Endtrübung und Trübung im Anlieferungszustand) angegeben.

**4. Sandriesel-Verfahren**

Beim Sandriesel-Test läßt man 3000 g Sand (Korn-größe 0,4 - 0,8 mm) im freien Fall aus einer bestimmten Höhe (etwa 200 cm) und in einem bestimmten Maße (200 g/min) auf die im Winkel von 45° stehende Oberfläche des Prüflings auffallen. Hierbei bilden sich Abriebflecken. Dann wird auf die Oberfläche Licht im Winkel von 45° aufgestrahlt, und die Intensität der Reflexion im Winkel von 45° bestimmt. Die Kratzfestigkeit wird ermittelt aus dem prozentualen Verhältnis der Reflexionsintensitäten nach und vor dem Test.

Ergebnisse Kratzfestbeschichtungen mit und ohne Zusatzmittel

| Zusatzmittel zur Grundkomponente | Gew.-% Zusatz | Haftung Gitterschnitt (Test 1) | Kratzfestigkeit Stahlwolle (Test 2) | Hub-Schub-Methode Eintrübung in % (Test 3) | | Sandrieselverfahren Eintrübung in % (Test 4) |
|---|---|---|---|---|---|---|
| | | | | 20 Hübe | 50 Hübe | |
| ohne Zusatz | - | 1 | B | 2,4 | 5,1 | 4,4 |
| mit erfindungsgemäßem Zusatz entsprechend Beispiel a) | 0,9 | 1 | A | 0,2 | 1,0 | 2,5 |
| mit erfindungsgemäßem Zusatz entsprechend Beispiel a) | 1,2 | 1 | A | 0,0 | 0,9 | 2,6 |

**Patentansprüche**

1. Beschichtungsmasse, bestehend im wesentlichen aus

A) 10 - 40 Gew.-%, bezogen auf das Gesamtgewicht der Beschichtungsmasse, einer teilweise hydrolysierten Siloxanverbindung, die durch Hydrolyse in Wasser bei etwa 50 - 80°C während einer Zeit von etwa 1 - 12 Stunden mindestens einer der folgenden Verbindungen erhalten wird:

(a) eines Kohlenwasserstofftrialkoxysilans der Formel $R'Si(OR'')_3$, worin R' eine Alkylgruppe mit 1 bis 4 Kohlenstoffatomen, eine Phenyl- oder Vinylgruppe und R'' eime Alkylgruppe mit 1 bis 4 Kohlenstoffatomen bedeuten,

und/oder

(b) Co-Kondensationsprodukten von (a) und 1 bis 40 Gew.-% eines Phenyl- oder Vinyltrialkoxysilans, worin die Alkoxygruppe 1 bis 4 Kohlenstoffatome enthält,

und/oder

(c) Co-Kondensationsprodukten von 1 Mol von (a) und 0,01 bis 1 Mol Tetraalkoxysilan, worin die Alkoxygruppe 1 bis 4 Kohlenstoffatome enthält,

und/oder

(d) Co-Kondensationsprodukten von 1 Mol von (a) und 0,05 bis 1 Mol Dialkyldialkoxysilan, worin die Alkyl- und Alkoxygruppen 1 bis 4 Kohlenstoffatome enthalten,

B) 0 bis 40 Gew.-%, bezogen auf das Gesamtgewicht der Beschichtungsmasse, einer wäßrigen Dispersion von kolloidalem Siliziumdioxid,

C) 0 bis 5 Gew.-%, bezogen auf das Gesamtgewicht des Überzugsmittels, eines veretherten Methylolmelamins,

D) 0,05 bis 15 Gew.-%, bezogen auf das Gesamtgewicht der Beschichtungsmasse, eines blockierten Polyisocyanates,

E) 0,5 bis 30 Gew.-%, bezogen auf das Gesamtgewicht der Beschichtungsmasse, Essigsäure sowie als Rest ein inertes organisches Lösungsmittel, dadurch gekennzeichnet, daß es weiterhin

F) 0,05 bis 4 Gew.-%, bezogen auf das Gesamtgewicht der Beschichtungsmasse, eines durch Hydroxylgruppen terminierten Polysiloxans mit einer mittleren Kettenlänge zwischen 1 und 25 enthält.

2) Verwendung von Massen gemäß Anspruch 1 zur Beschichtung von organischen Thermoplasten.

3) Verwendung von Massen gemäß Anspruch 1 zur Beschichtung von Polycarbonat.

**Claims**

Coating composition, consisting essentially of

A) 10 - 40% by weight, based on the total weight of the coating composition, of a partially hydrolysed siloxane compound which is obtained by hydrolysis in water at about 50 - 80°C for a period of about 1 - 12 hours of at least one of the following compounds:

(a) a hydrocarbon trialkoxysilane of the formula

$R'Si(OR'')_3$,

wherein

R' denotes an alkyl group with 1 to 4 carbon atoms, a phenyl group or vinyl group and

R'' denotes an alkyl group with 1 to 4 carbon atoms,

and/or

(b) co-condensation products of (a) and 1 to 40% by weight of of a phenyl- or vinyltrialkoxysilane, wherein the alkoxy group contains 1 to 4 carbon atoms,

and/or

(c) co-condensation products of 1 mol of (a) and 0.01 to 1 mol of tetraalkoxysilane, wherein the alkoxy group contains 1 to 4 carbon atoms,

and/or

(d) co-condensation products of 1 mol of (a) and 0.05 to 1 mol of dialkyldialkoxysilane, wherein the alkyl and alkoxy groups contain 1 to 4 carbon atoms,

B) 0 to 40% by weight, based on the total weight of the coating composition, of an aqueous dispersion of colloidal silicon dioxide,

C) 0 to 5% by weight, based on the total weight of the coating agent, of an etherified methylolmelamine,

D) 0.05 to 15% by weight, based on the total weight of the coating composition, of a blocked polyisocyanate,

E) 0.5 to 30% by weight, based on the total weight of the coating composition, of acetic acid and, as the remainder, an inert organic solvent,

characterised in that it also contains

F) 0.05 to 4% by weight, based on the total weight of the coating composition, of a polysiloxane which is terminated by hydroxyl groups and has an average chain length of between 1 and 25.

2. Use of compositions according to Claim 1 for coating organic thermoplastics.

3. Use of compositions according to Claim 1 for coating polycarbonate.

**Revendications**

1. Masse de revêtement, consistant essentiellement en (A) 10 à 40 % en poids, par rapport au poids total de la masse de revêtement, d'un dérivé de siloxanne partiellement hydrolyse, qui a été obtenu par hydrolyse dans l'eau à une température d'environ 50 à 80° C pendant une durée d'environ 1 à 12 h d'au moins un des composés suivants

(a) un hydrocarbure-trialcoxysilane de formule $R'Si(OR'')_3$ dans laquelle R' représente un groupe alkyle en $C_1$-$C_4$, un groupe phényle ou vinyle et R'' représente un groupe alkyle en $C_1$-$C_4$,

et/ou

(b) des produits de co-condensation de (a) et 1 à 40 % en poids d'un phényl- ou vinyl-trialcoxysilane dans lequel les groupes alcoxy sont en $C_1$-$C_4$,

et/ou

(c) des produits de co-condensation de 1 mole de (a) et 0,01 à 1 mole d'un tétraalcoxysilane dans lequel les groupes alcoxy sont en $C_1$-$C_4$,

et/ou

(d) des produits de co-condensation de 1 mole de (a) et 0,05 à 1 mole d'un dialkyldialcoxysilane dans lequel les groupes alkyle et alcoxy contiennent 1 à 4 atomes de carbone,

(B) 0 à 40 % en poids, par rapport au poids total de la masse de revêtement, d'une dispersion aqueuse de silice colloïdale,

(C) 0 à 5 % en poids, par rapport au poids total du produit de revêtement, d'une méthylolmélamine éthérifiée,

(D) 0,05 à 15 % en poids, par rapport au poids total de la masse de revêtement, d'un polyisocyanate bloque,

(E) 0,5 à 30 % en poids, par rapport au poids total de la masse de revêtement, d'acide acétique, le solde consistant en un solvant organique inerte,

caractérisé en ce qu'elle contient en outre

(F) 0,05 à 4 % en poids, par rapport au poids total de la masse de revêtement, d'un polysiloxanne à groupes terminaux hydroxy à une longueur de chaîne moyenne de 1 à 25.

2. Utilisation de masses selon la revendication 1 pour le revêtement de matières thermoplastiques organiques.

3. Utilisation de masses selon la revendication 1 pour le revêtement du polycarbonate.